# EUROPEAN PATENT APPLICATION

(11) **EP 2 698 453 A1**
(43) Date of publication of application: **19.02.2014**
(21) Application number: 11818997.6
(22) Date of filing: 01.12.2011
(51) Int. Cl.: C23D 5/06, C03C 17/00, C03C 17/02

(54) **DIGITAL-INJECTION METHOD FOR DECORATING SURFACES**

(71) Applicant: Saima Taldea, S.l, 20560 Oñati Guipuzcoa (ES)
(72) Inventor: SAIZ MALAVIA, José Luis, E-20560 Oñati, Guipuzcoa (ES)
(74) Representative: Monzón de la Flor, Luis Miguel
(86) International application number: PCT/ES2011/070833
(87) International publication number: WO 2013/079734

(57) **Abstract**

Procedure that comprises the stages of: treatment of the surface to be decorated by cleaning, enamel is then applied, subsequently the applied enamel is dried, the process is continued by decorating the piece with the application of ink by means of digital injection and, finally, a vitrifying process is carried out, a stage in which the ink is placed directly in the oven to vitrify it during a time and at a temperature in accordance with the materials and applied products. Thanks to the procedure stages, their nature and their sequencing, the quality of the obtained results is improved and the application procedure is simplified.

## Description

### OBJECT OF THE INVENTION

The object of this invention, as indicated by its title, is a decoration procedure for surfaces, preferably of metal, e.g. aluminum, iron or steel, and of other materials such as glass.

This invention is characterized by the nature and precise sequence of the decoration procedure stages, as well as the materials to which it is applied, resulting in a procedure that simplifies and enhances the results of the decoration procedures used to date.

Therefore, this invention is confined to the scope of decoration processes for materials such as aluminum, steel, iron or glass.

### BACKGROUND OF THE INVENTION

The decoration process for aluminum and glass is based on the use of serigraphs, whereas for steel decalcomanias are used as well as serigraphs. Decoration based on digital injection is known in ceramics.

The process employed for the decoration of aluminum and glass has been screen printing, whereas for enameled steel the transfer of decalcomanias is used. The process that is most like digital injection in terms of the final result obtained is the transfer of decals.

Screen printing is a printing technique used to reproduce documents and images on any type of material. The method consists of transferring ink through a mesh stretched across a frame, where the passage of ink is blocked in the areas where there will be no image by means of an emulsion or varnish and the area through which the ink will pass is left free.

The processes for decorating materials such as steel require that, first of all, the piece be enameled; the piece is then subjected to a vitrifying and baking process, to subsequently continue with the arrangement of decals and, finally, another vitrifying process by baking.

The screen printing processes employed for materials such as aluminum and glass are complex and the results are improvable.

Therefore, the object of this invention is to develop a surface decoration procedure for materials such as aluminum, iron or steel, as well as glass, which in one case simplifies the procedure employed and in any of the processes used improves the quality of the obtained results. To this end, a procedure such as the one described hereinafter is developed, and the essence of which is described in the first claim.

### DESCRIPTION OF THE INVENTION

The object of the invention - a surface decoration procedure - comprises a series of specific stages and processes which we proceed to explain below:

First of all, the surface to be decorated is treated by using the necessary cleaning processes to eliminate residue such as: grease, oil, impurities, rust, etc.

Enamel is then applied to the surface of the pieces. The applied enamel is known as substrate or interface. This enamel can either be a flux, direct enamel or flux plus a coating.

The applied enamel is subsequently dried at a temperature that can range from ambient temperature to 120º C.

The process is continued by decorating the piece with the application of ink by means of digital injection on the dry enamel, in a digital printer employing the propelled (dosed) inkjet technique through the printer nozzles. The ink thus applied is deposited and absorbed by the dry enamel.

The inks can withstand temperatures ranging from 500º C to 1300º C, depending on their composition.

Finally a vitrifying process is carried out; in this stage, with the ink dried or without drying, the piece is placed directly in the oven to vitrify it during a time and at a temperature in accordance with the materials and applied products.

### PREFERRED EMBODIMENT OF THE INVENTION

As for the specific aspects that enable the implementation of the invention for a surface decoration procedure using digital injection, in addition to the specific above indicated stages of surface treatment, enamel application, subsequent drying, ink application by digital injection and final vitrification, indicated herein are some specific aspects that perfect some of the decoration process stages.

For instance, the temperature ranges used in the vitrifying processes would be, depending on the material, as follows:
- For enameled aluminum, from 520º C to 600º C.
- For glass, from 550º C to 700º C.
- For enameled steel and cast iron, from 700º C to 860º C.

As for the application of ink by digital injection, this is done in a digital printer, and any of the printers available on the market can be used.

Thanks to the procedure stages, their nature and their sequencing, a surface decoration procedure is achieved for materials such as aluminum, iron, steel and glass, which improves the quality of the results obtained by procedures employed for some of them, e.g. screen printing, which have nothing to do with the procedure proposed herein, and which in other cases simplifies the application procedure, such as in the case of decals applied to previously enameled steels.

The improvement consists of the fact that, with digital injection, the inks are applied to the enamel before vitrification, whereas decals have to be placed on vitrified enamel and then everything has to be vitrified again.

Having sufficiently described the nature of this invention, as well as the way to implement it, it is noted that, in keeping with its essentiality, it may be implemented in other forms of embodiment which differ in detail from the one indicated by way of example and which will likewise be covered by the protection obtained, provided they do not alter, change or modify its fundamental principle.

## Claims

1. Surface decoration procedure using digital injection, **characterized in that** it comprises the following stages:
- First of all, the surface to be decorated is treated,
- enamel is then applied to the surface of the pieces,
- the applied enamel is subsequently dried,
- The process is continued by decorating the piece with the application of ink by means of digital injection on the dry enamel, in a digital printer employing the propelled (dosed) inkjet technique through the printer nozzles; the ink thus applied is deposited and absorbed by the dry enamel
- Finally a vitrifying process is carried out, a stage in which the ink is placed directly in the oven to vitrify it during a time and at a temperature in accordance with the materials and applied products.

2. Surface decoration procedure using digital injection, as per claim 1, **characterized in that** the surface cleaning stage eliminates residue such as: grease, oil, impurities, rust, etc.

3. Surface decoration procedure using digital injection, as per claim 1, **characterized in that** the applied enamel is either a flux, direct enamel or flux plus a coating.

4. Surface decoration procedure using digital injection, as per claim 1, **characterized in that** the applied enamel is dried at a temperature between ambient temperature and 120º C.

5. Surface decoration procedure using digital injection, as per claim 1, **characterized in that** the inks withstand temperatures from 500º C to 1300º C, depending on their composition.

6. Surface decoration procedure using digital injection, as per claim 1, **characterized in that** the final vitrification for enameled aluminum is done at a temperature between 520º C and 600º C.

7. Surface decoration procedure using digital injection, as per claim 1, **characterized in that** the final vitrification for glass is done at a temperature between 550º C and 700º C.

8. Surface decoration procedure using digital injection, as per claim 1, **characterized in that** the final vitrification for enameled steel and cast iron is done at a temperature between 700º C and 860º C.
